# EUROPEAN PATENT APPLICATION

(11) **EP 3 070 581 A1**
(43) Date of publication of application: **21.09.2016**
(21) Application number: 15180368.1
(22) Date of filing: 10.08.2015
(51) Int. Cl.: G06F 3/023

(54) **TEXT INPUTTING METHOD AND MULTIMEDIA TEXT INPUT SYSTEM**

(30) Priority: 16.03.2015 TW 104108345
(71) Applicant: Compal Broadband Networks Inc., 114 Taipei City (TW)
(72) Inventor: Chen, Kuo-Shin, Hsinchu County 302 (TW)
(74) Representative: Becker Kurig Straus

(57) **Abstract**

A text inputting method is disclosed. The text input method is utilized in a multimedia text input system. The multimedia text input system includes a display device and an input device. The text input method includes displaying a virtual keyboard, wherein the virtual keyboard includes a plurality of blocks, the plurality of blocks correspond to a plurality of number keys of the input device; displaying a plurality of virtual character keys and a plurality of characters corresponding to the virtual character keys after the display device receives a first number information, wherein the plurality of characters are included in a block corresponding to the first number information; and displaying a character among the plurality of characters corresponding to a second number information after the display device receives the second number information.

## Description

### Field of the Invention

The present invention relates to a text inputting method and a multimedia text input system, and more particularly, to a text inputting method and a multimedia text input system capable of inputting text conveniently and quickly.

### Background of the Invention

As multimedia and internet technologies grow, users may watch video on a display device such as a television. In addition, users may also browse websites, or input text messages on a social network using the display device. To browse the websites, text needs to be inputted. However, display devices in general are not equipped with a keyboard as are computers. In the prior art, an additional keyboard may be externally coupled to the display device as a text inputting interface, or use of a touch panel as another text inputting interface may be available. Nevertheless, the externally coupled keyboard requires an extra space, and the touch panel raises a production cost of the display device and causes inconvenience in operation.

Therefore, how to provide a text inputting method capable of inputting text conveniently and quickly is a significant objective in the field.

### Summary of the Invention

It is therefore a primary objective of the present invention to provide a text inputting method and a multimedia text input system capable of inputting text conveniently and quickly to improve over disadvantages of the prior art.

This is achieved by a method of connecting to a wireless data network and a system for connecting to a wireless data network according to independent claims found here below. The dependent claims pertain to corresponding further developments and improvements.

As will be seen more clearly from the detailed description following below, the claimed text inputting method comprises the display device displaying a virtual keyboard, wherein the virtual keyboard comprises a plurality of blocks, and each of the plurality of blocks is corresponding to one of a plurality of number keys; the display device displaying a plurality of virtual character keys and a plurality of characters corresponding to the plurality of virtual character keys after the display device receives a first number information from the input device, wherein the plurality of characters are included in a block among the plurality of blocks corresponding to the first number information; and the display device displaying a character among the plurality of characters corresponding to a second number information after the display device receives the second number information from the input device.

In another aspect, as will be seen more clearly from the detailed description following below, the claimed multimedia text input system comprises an input device, comprising a plurality of number keys, configured to generate a first number information and a second number information; and a display device, wherein the display device displays a virtual keyboard, the virtual keyboard comprising a plurality of blocks, each of the plurality of blocks is corresponding to one of the plurality of number keys, the display device displaying a plurality of virtual character keys and a plurality of characters corresponding to the plurality of virtual character keys after the display device receives the first number information from the input device, and the display device displaying a character among the plurality of characters corresponding to the second number information after the display device receives the second number information from the input device; wherein the plurality of characters are included in a block among the plurality of blocks corresponding to the first number information.

### Brief Description of the Drawings

The invention is further illustrated by way of example with reference to the accompanying drawings. Thereof,
FIG. 1 is a schematic diagram of a virtual keyboard,
FIG. 2 is a schematic diagram of a virtual keyboard,
FIG. 3 is a schematic diagram of a remote control corresponding to a virtual keyboard in FIG. 2,
FIG. 4 is a schematic diagram of a multimedia text input system according to an embodiment of the present invention
FIG. 5 is a schematic diagram of a virtual keyboard according to an embodiment of the present invention,
FIG. 6 is a schematic diagram of a plurality of virtual character keys according to an embodiment of the present invention, and
FIG. 7 is a schematic diagram of a text inputting process according to an embodiment of the present invention.

### Detailed Description

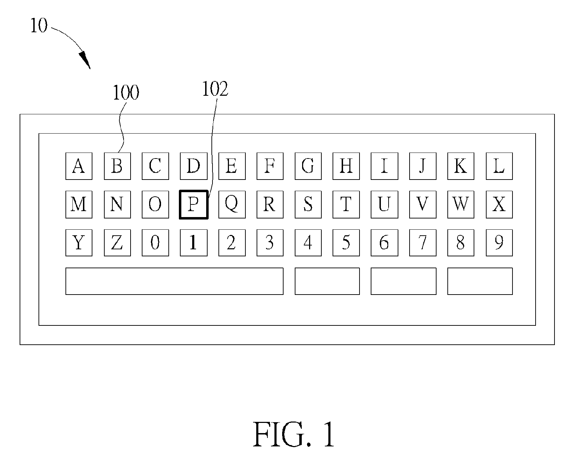

In addition to using the external coupled keyboard and the touch panel, user may install a text inputting software in the display device. The text inputting software may display a virtual keyboard, and the user may select characters via a input device such as a remote control. In general, the remote control includes a plurality of number keys and a plurality of directional keys. The user may use the directional keys to select the desired character. For example, FIG. 1 is a schematic diagram of a virtual keyboard 10. The virtual keyboard 10 comprises a plurality of virtual character keys 100 and a character-selecting frame 102. The character-selecting frame 102 is utilized for selecting a single virtual character key 100. When the user presses the directional keys, the remote control generates corresponding directional signals and sends the directional signals to the display device (e.g., a television), and the character-selecting frame 102 is moved upward, downward, leftward or rightward according to the directional signals, so as to select the desired character. However, since different characters are distributed over different regions of the virtual keyboard 10, the user may need to press the directional keys many times to select the desired character, which is inconvenient.

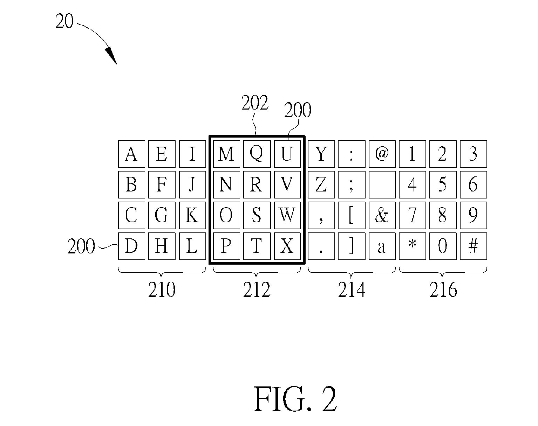

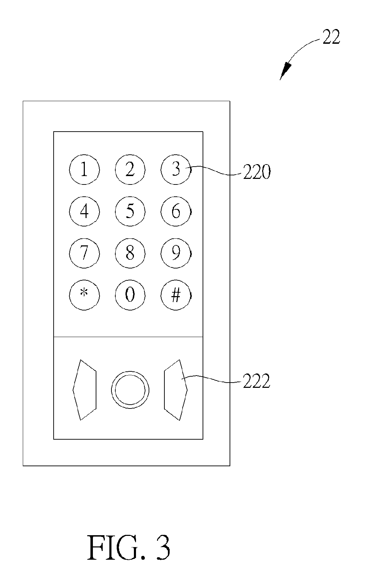

In another perspective, the user may use the directional keys associated with the number keys to select the desired character. For example, FIG. 2 is a schematic diagram of a virtual keyboard 20, and FIG. 3 is a schematic diagram of a remote control 22 corresponding to the virtual keyboard 20. The remote control 22 comprises a plurality of number keys 220 and a plurality of directional keys 222. The virtual keyboard 20 comprises blocks 210, 212, 214, 216 and a block-selecting frame 202. Each block comprises a plurality of virtual character keys 200. Each of the virtual character keys 200 is corresponding to a single character. The plurality of virtual character keys 200 within each block are corresponding to the plurality of number keys 220 of the remote control 22. In detail, the plurality of virtual character keys 200 within each block are arranged as a 4x3 array, which is equivalent to an arrangement that the number keys 220 are arranged in the remote control 22. When the user likes to input a specific character, the user first moves the block-selecting frame 202 leftward or rightward, via the directional keys 222 of the remote control 22, to select the specific block at which the specific character located from the blocks 210, 212, 214, 216, and presses the specific number key 220 in the remote control 22, where the specific number key 220 is corresponding to the specific virtual character key 200 and the specific virtual character key 200 is corresponding to the specific character, so as to input the specific character. For example, the English letter U is located at the 1^{st} row and the 3^{rd} column of the block 212. If the specific character is the English letter U, the user first moves the block-selecting frame 202 to the block 212 via the directional keys 222 and then presses the number key 220 at the 1^{st} row and the 3^{rd} column on the remote control 22, and thus, the English letter U is inputted. However, when the next desired character is located at a block far from the current block, the user may need to press the directional keys 222 many times so as to select the block at which the next desired character is located. In addition, as inputting text, the user has to press the number keys 220 and the directional keys 222 back and forth, which is inconvenient.

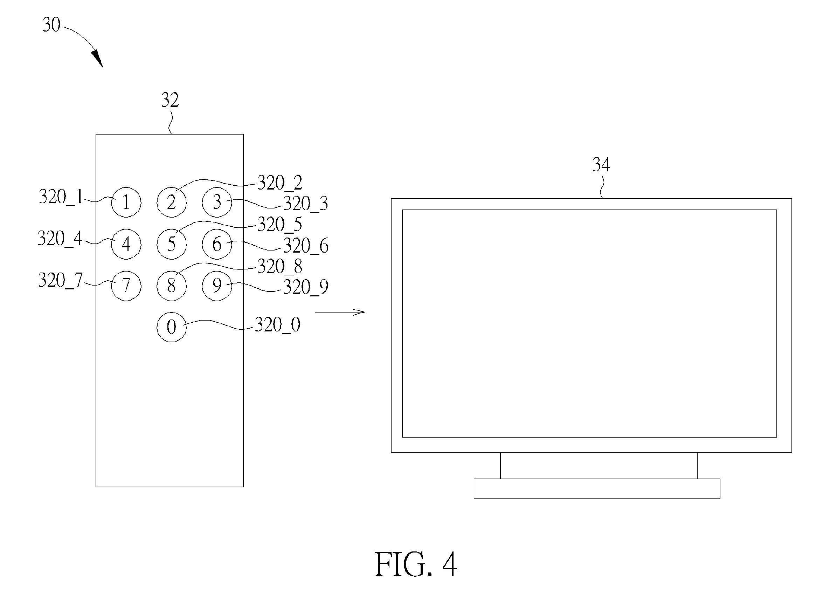

In order to alleviate the inconvenience of user inputting text using the remote control, the present invention utilizes only the number keys to input text. Meanwhile, a number of pressing the number keys is further reduced. Please refer to FIG. 4, which is a schematic diagram of a multimedia text input system 30 according to an embodiment of the present invention. The multimedia text input system 30 comprises a display device 34 and an input device 32. The display device 34 may be a television, and the input device 32 may be a remote control corresponding to the display device 34. The input device 32 comprises at least number keys 320_0-320_9. The number keys 320_0-320_9 are corresponding to numbers 0-9, respectively. The input device 32 may send the remote control signals to the display device 34 via wireless transmission, so as to perform text inputting.

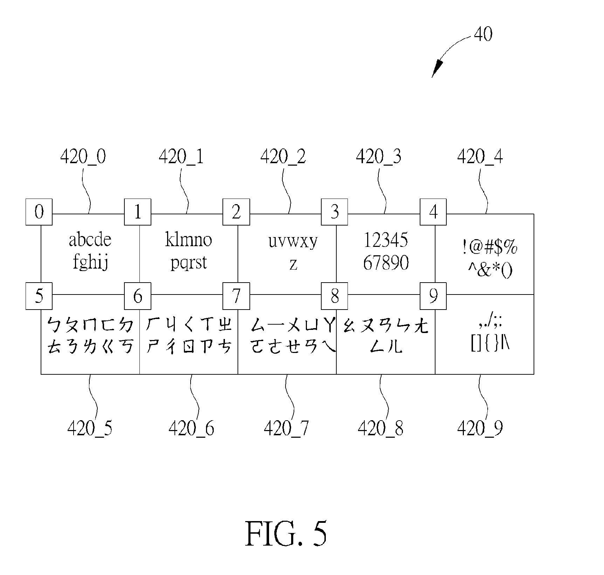

Specifically, when the user likes to input text, the display device 34 displays a virtual keyboard first. For example, FIG. 5 is a schematic diagram of a virtual keyboard 40 according to an embodiment of the present invention. The virtual keyboard 40 comprises blocks 420_0-420_9. The blocks 420_0-420_9 are corresponding to the number keys 320_0-320_9 of the input device 32, respectively. Each of the blocks 420_0-420_9 comprises a plurality of characters. The plurality of characters may be English alphabetic characters, another language's characters, phonetic symbols, punctuations, and numbers. The plurality of characters may be displayed in a first size within the virtual keyboard 40. After the display device 34 displays the virtual keyboard 40, the user presses certain number key (e.g., the number key 320_x) on the input device 32 to select the block (e.g., the block 420_x) containing the character which the user likes to input. Then, the input device 32 generates a first number information related to the number key 320_x, and sends the first number information to the display device 34 as the remote control signal via wireless transmission. After the display device 34 receives the first number information, the display device 34 displays a plurality of virtual character keys and a plurality of first characters corresponding to the plurality of virtual character keys. Note that the plurality of first characters are contained within the block 420_x. Furthermore, each of the plurality of virtual character keys is uniquely corresponding to one of the number keys 320_0-320_9. After the display device 34 displays the plurality of virtual character keys and the plurality of first characters, the user presses the number key (e.g., the number key 320_y) corresponding to the character which the user like to input, according to the plurality of virtual character keys and the corresponding plurality of first characters displayed by the display device 34. Then, the input device 32 generates a second number information related to the number key 320_y, and sends the second number information to the display device 34 as the remote control signal via wireless transmission. After the display device 34 receives the second number information, the display device 34 displays the character which the virtual character key corresponding to the number key 320_y.

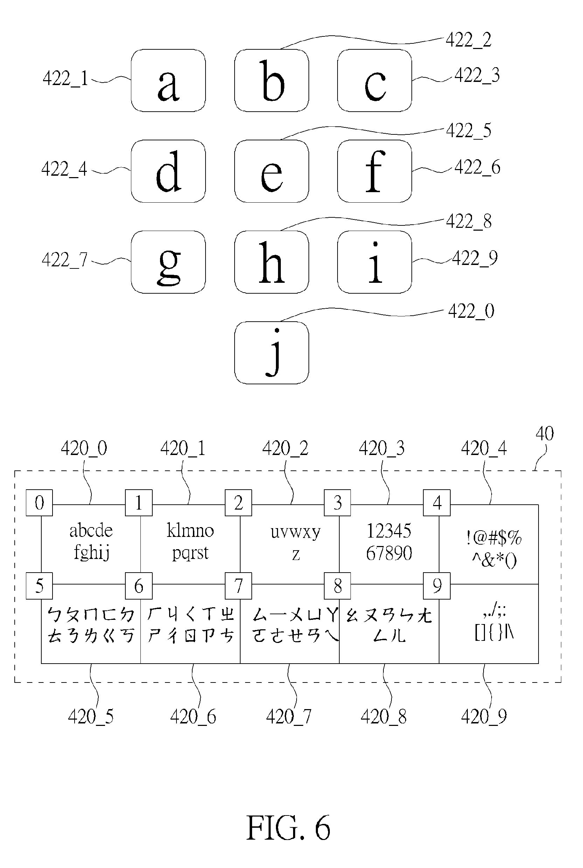

For example, according to the virtual keyboard 40, when the user likes to input an English letter g, the user first presses the number key 320_0 to select the block 420_0 which contains the English letter g. Then the input device 32 generates the first number information related to the number key 320_0. After the display device 34 receives the first number information from the input device 32, the display device 34 displays virtual character keys 422_0-422_9 and the plurality of first characters in the block 420_0, i.e., English letters a-j as FIG. 6 shows, corresponding to the virtual character keys 422_0-422_9. Notably, an arrangement of the virtual character keys 422_0-422_9 displayed by the display device 34 is the same as the number keys 320_0-320_9 disposed on the input device 32, and the virtual character keys 422_0-422_9 represent the English letters a-j contained in the block 420_0, respectively. Furthermore, the plurality of first characters within the block 420_0 may be displayed in a second size, larger than the first size, in the display device 34, so as to display the virtual character keys 422_0-422_9 larger and more obviously, which is easy for the user to select the correct character. After the display device 34 displays the virtual character keys 422_0-422_9 and the corresponding English letters a-j, the user may press the number key 320_7. Then the input device 32 generates the second number information related to the number key 320_7, and sends the second number information to the display device 34 as the remote control signal via wireless transmission. After the display device 34 receives the second number information related to the number key 320_7, the display device 34 displays the English letter g which the virtual character key 422_7 corresponding to the number key 320_7. Thus, the English letter g is inputted in a text inputting region of a screen of the display device 34.

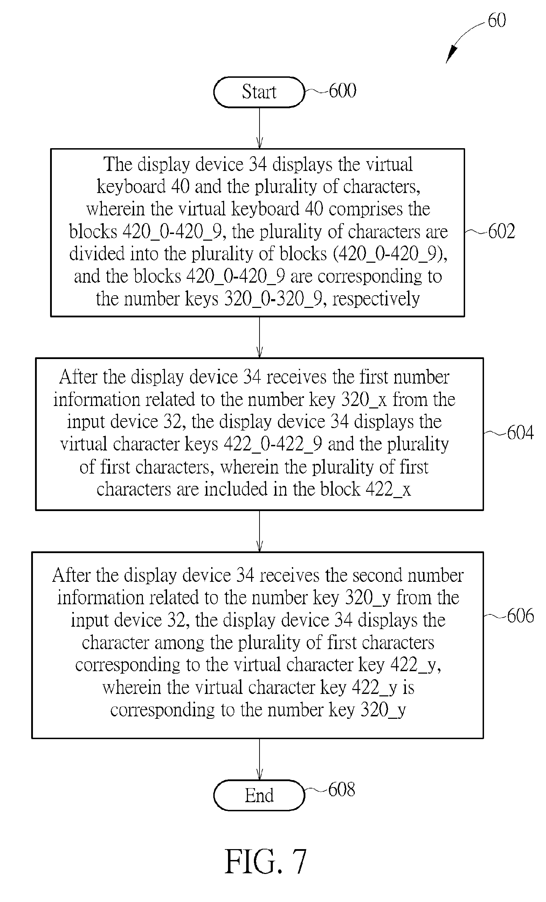

Operations of inputting text on the display device 34 using the input device 32 may further be summarized as a text inputting process 60. The text inputting process 60 is executed by the multimedia text input system 30. As FIG. 7 shows, the text inputting process 60 comprises following steps:

| | |
|---|---|
| Step 600: | Start. |
| Step 602: | The display device 34 displays the virtual keyboard 40 and the plurality of characters, wherein the virtual keyboard 40 comprises the blocks 420_0-420_9, the plurality of characters are divided into the plurality of blocks (420_0-420_9), and the blocks 420_0-420_9 |
| | are corresponding to the number keys 320_0-320_9, respectively. |
| Step 604: | After the display device 34 receives the first number information related to the number key 320_x from the input device 32, the display device 34 displays the virtual character keys 422_0-422_9 and the plurality of first characters, wherein the plurality of first characters are included in the block 422_x. |
| Step 606: | After the display device 34 receives the second number information related to the number key 320_y from the input device 32, the display device 34 displays the character among the plurality of first characters corresponding to the virtual character key 422_y, wherein the virtual character key 422_y is corresponding to the number key 320_y. |
| Step 608: | End. |

Details of each steps of the text inputting process 60 is referred to related paragraph stated in the above, which is not narrated herein. According to the text inputting process 60, the user is able to accomplish text inputting by only using the number keys. There is no need for user to press the number keys and the directional keys back and forth, which is convenient for the user. Furthermore, for inputting each character, the user only needs to press the number keys twice, which allows the user to input text quickly.

The embodiments in the above are for illustrative purpose. Those skilled in the art may make modification and alternation accordingly, and are not limited by what is disclosed herein. For example, the display device is not limited to a television. The display device may also be a projector associated with a screen. The input device is not limited to be a remote control. The input device may also be a control panel comprising number keys. The control signal transmitted from the input device to the display device is not limited to be transmitted via wireless transmission. The input device may be connected to the display device, and the control signal may be transmitted via wire line transmission. The characters included in the blocks 420_0-420_9 are not limited to be from the English alphabet, phonetic symbols, punctuations, and numbers. The characters included in the blocks 420_0-420_9 may also be from the Spanish alphabet, the Russian alphabet, Greek alphabet, or any other alphabet, and not limited thereto.

In summary, according to the text inputting method of the present invention, the user is able to accomplish text inputting by only using the number keys. Thus, there is no need for user to press the number keys and the directional keys back and forth, which is convenient for the user. Furthermore, for inputting each character, the user only needs to press the number keys twice, such that the user is able to input text quickly.

## Claims

1. A text inputting method (60), utilized in a multimedia text input system (30), the multimedia text input system (30) comprising a display device (34) and an input device (32), the input device (32) comprising a plurality of number keys (320_0-320_9), the text inputting method (60) **characterized by** comprising the steps of:
the display device (34) displaying a virtual keyboard (40) and a plurality of characters, wherein the virtual keyboard (40) comprises a plurality of blocks (420_0-420_9), the plurality of characters are divided into the plurality of blocks (420_0-420_9), and each of the plurality of blocks (420_0-420_9) is corresponding to one of the plurality of number keys (320_0-320_9);
the display device (34) displaying a plurality of virtual character keys (422_0-422_9) and a plurality of first characters corresponding to the plurality of virtual character keys (422_0-422_9) after the display device (34) receives a first number information from the input device (32), wherein the plurality of first characters are included in a block among the plurality of blocks (420_0-420_9) corresponding to the first number information; and
the display device (34) displaying a character among the plurality of first characters corresponding to a second number information after the display device (34) receives the second number information from the input device (32).

2. The method of claim 1, further **characterized by** using a television as the display device (34).

3. The method of claims 1 or 2, further **characterized by** using a remote control as the input device (32).

4. The method of any of claims 1-3, further **characterized by** the display device (34) displaying the plurality of virtual character keys (422_0-422_9) of the block in the same arrangement as the plurality of number keys (320_0-320_9) are arranged on the input device (32).

5. The method of any of claims 1-4, further **characterized by** the display device (34) displaying the plurality of characters in a first size, and the display device (34) displaying the plurality of first characters in a second size after the display device (34) receives the first number information, wherein the second size is larger than the first size.

6. The method of any of claims 1-5, further **characterized by** a user inputting the first number information and the second number information to the input device (32) through the plurality of number keys (320_0-320_9), and the input device (32) sending the first number information and the second number information to the display device (34).

7. A multimedia text input system (30), comprising:
an input device (32), comprising a plurality of number keys (320_0-320_9), configured to generate a first number information and a second number information; and
a display device (34), wherein the display device (34) displays a virtual keyboard (40) and a plurality of characters, the virtual keyboard (40) comprising a plurality of blocks (420_0-420_9), the plurality of characters divided into the plurality of blocks (420_0-420_9), each of the plurality of blocks (420_0-420_9) is corresponding to one of the plurality of number keys (320_0-320_9), the display device (34) displays a plurality of virtual character keys (422_0-422_9) and a plurality of first characters corresponding to the plurality of virtual character keys (422_0-422_9) after the display device (34) receives the first number information from the input device (32), and the display device (34) displays a character among the plurality of first characters corresponding to the second number information after the display device (34) receives the second number information from the input device (32);
wherein the plurality of first characters are included in a block among the plurality of blocks (420_0-420_9) corresponding to the first number information.

8. The system of claim 7, further **characterized in that** the display device (34) is a television.

9. The system of claims 7 or 8, further **characterized in that** the input device (32) is a remote control.

10. The system of any of claims 7-9, further **characterized in that** the display device (34) is configured to display the plurality of virtual character keys (422_0-422_9) of the block in the same arrangement as the plurality of number keys (320_0-320_9) are arranged on the input device (32).

11. The system of any of claims 7-10, **further characterized in that** the display device (34) is configured to display the plurality of characters in a first size and display the plurality of first characters in a second size after the display device (34) receives the first number information, wherein the second size is larger than the first size.

12. The system of any of claims 7-11, further **characterized in that** the input device (32) is configured to send the first number information and the second number information to the display device (34) when the first number information and the second number information are inputted by a user to the input device (32) through the plurality of number keys (320_0-320_9).
